# EUROPEAN PATENT APPLICATION

(11) **EP 4 421 939 A1**
(43) Date of publication of application: **28.08.2024**
(21) Application number: 23866708.3
(22) Date of filing: 13.09.2023
(51) Int. Cl.: H01M 10/0569, H01M 10/0567, H01M 10/0525

(54) **ELECTROCHEMICAL APPARATUS AND ELECTRONIC APPARATUS**

(30) Priority: 28.12.2022 CN 202211697960
(71) Applicant: Dongguan Amperex Technology Limited, Dongguan, Guangdong 523000 (CN)
(72) Inventor: JIANG, Chenxi, Dongguan Guangdong 523000 (CN); YU, Hongming, Dongguan Guangdong 523000 (CN); TAO, Xinghua, Dongguan Guangdong 523000 (CN); MO, Mingliang, Dongguan Guangdong 523000 (CN)
(74) Representative: Icosa
(86) International application number: PCT/CN2023/118628
(87) International publication number: WO 2024/139417

(57) **Abstract**

This application provides an electrochemical apparatus and an electronic apparatus. The electrochemical apparatus includes a positive electrode, a negative electrode, and an electrolyte, where the electrolyte includes propylene carbonate, ethylene carbonate, and a nitrile additive. Based on a mass of the electrolyte, a mass percentage of the propylene carbonate is 4% to 26%, a mass percentage of the ethylene carbonate is 14% to 46%, and a mass percentage of the nitrile additive is 2.8% to 8.5%. A viscosity of the electrolyte at 25°C is less than or equal to 5.8 mPa·s. By coordinately controlling the adding percentages of the propylene carbonate, ethylene carbonate, and nitrile additive, as well as the viscosity of the electrolyte, the contradiction between high-voltage and high-temperature stability and room-temperature kinetic performance of the electrochemical apparatus can be resolved.

## Description

This application claims priority to Chinese Patent Application No. 202211697960.9, filed with the China National Intellectual Property Administration on December 28, 2022 and entitled "ELECTROCHEMICAL APPARATUS AND ELECTRONIC APPARATUS", which is incorporated herein by reference in its entirety.

### TECHNICAL FIELD

This application relates to the field of electrochemical technologies, and in particular, to an electrochemical apparatus and an electronic apparatus.

### BACKGROUND

Lithium-ion batteries have advantages such as high energy storage density, high open-circuit voltage, low self-discharge rate, long cycle life, and high safety, and therefore are widely used in the fields such as portable electrical energy storage, electronic devices, and electric vehicles. For high-voltage lithium cobaltate lithium-ion battery systems, the biggest challenge comes from the contradiction between stability at high temperatures (for example, cycling at 45°C, float charging at 45°C, and storage at 85°C) and kinetic performance (for example, cycling, battery impedance, and lithium precipitation) at room temperature. For high-voltage systems, electrolyte is required to be highly resistant to oxidation. However, solvents with good kinetic performance all exhibit poor resistance to oxidation. Therefore, in view of this, how the high-voltage and high-temperature stability and the room-temperature kinetic performance of lithium-ion batteries are balanced has become an urgent technical problem to be solved by persons skilled in the art.

### SUMMARY

Some embodiments of this application are intended to provide an electrochemical apparatus and an electronic apparatus, so as to resolve the contradiction between high-voltage and high-temperature stability and room-temperature kinetic performance of the electrochemical apparatus.

A first aspect of this application provides an electrochemical apparatus. The electrochemical apparatus includes a positive electrode, a negative electrode, and an electrolyte, where the electrolyte includes propylene carbonate, ethylene carbonate, and nitrile additive. Based on a mass of the electrolyte, a mass percentage of the propylene carbonate is 4% to 26%, a mass percentage of the ethylene carbonate is 14% to 46%, and a mass percentage of the nitrile additive is 2.8% to 8.5%. A viscosity of the electrolyte at 25°C is less than or equal to 5.8 mPa·s. Controlling the mass percentages of the propylene carbonate, ethylene carbonate, and nitrile additive, as well as the viscosity of the electrolyte at 25°C within the foregoing ranges is conducive to formation of a synergistic effect between the various components in the electrolyte to improve the high-voltage and high-temperature stability of the electrochemical apparatus and enhance the room-temperature kinetic performance of the electrochemical apparatus, thereby resolving the contradiction between the high-voltage and high-temperature stability and the room-temperature kinetic performance of the electrochemical apparatus.

In some embodiments of this application, the electrolyte satisfies at least one of the following conditions: (1) the mass percentage of the propylene carbonate is 8% to 21%; (2) the mass percentage of the ethylene carbonate is 18% to 38%; or (3) the mass percentage of the nitrile additive is 3.5% to 7.2%.

Controlling the mass percentage of the propylene carbonate within the foregoing range can improve the high-voltage and high-temperature stability of the electrochemical apparatus and enhance the room-temperature kinetic performance of the electrochemical apparatus, thereby resolving the contradiction between the high-voltage and high-temperature stability and the room-temperature kinetic performance of the electrochemical apparatus. In some embodiments of this application, the mass percentage of the propylene carbonate is 9% to 18%. This enables the electrochemical apparatus to exhibit better high-voltage and high-temperature stability and room-temperature kinetic performance.

Controlling the mass percentage of the ethylene carbonate in the foregoing range can improve the high-voltage and high-temperature stability of the electrochemical apparatus and enhance the room-temperature kinetic performance of the electrochemical apparatus, thereby resolving the contradiction between the high-voltage and high-temperature stability and the room-temperature kinetic performance of the electrochemical apparatus. In some embodiments of this application, the mass percentage of the ethylene carbonate is 24% to 36%. This enables the electrochemical apparatus to exhibit better high-voltage and high-temperature stability and room-temperature kinetic performance.

Controlling the percentage of the nitrile additive within the foregoing range can improve the high-voltage and high-temperature stability of the electrochemical apparatus, thereby resolving the contradiction between the high-voltage and high-temperature stability and the room-temperature kinetic performance of the electrochemical apparatus. In some embodiments of this application, the mass percentage of the nitrile additive is 3.9% to 6.4%. This enables the electrochemical apparatus to exhibit better high-voltage and high-temperature stability and room-temperature kinetic performance.

In some embodiments of this application, the nitrile additive includes at least one of succinonitrile, glutaronitrile, adiponitrile, 1,5-dicyanopentane, 1,6-dicyanohexane, 1,7-dicyanoheptane, 1,8-dicyanoctane alkane, 1,9-dicyanononane, 1,10-dicyanodecane, 1, 12-dicyanododecane, tetramethylsuccinonitrile, 2-methylglutaronitrile, 2,4-dimethylglutaronitrile, 2,2,4,4-tetramethylglutaronitrile, 1,3,5-pentanetricarbonitrile, 1,2,3-propanetricarbonitrile, 1,3,6-hexanetrinitrile, 1,2,6-hexanetrinitrile, ethylene glycol bis(propionitrile) ether, 1,2,3-tris(2-cyanoethoxy)propane, 1,2,4-tris(2-cyanoethoxy)butane, or 1,2,5-tris(cyanoethoxy)pentane. Selecting the foregoing nitrile additives can improve the high-voltage and high-temperature stability of the electrochemical apparatus, thereby resolving the contradiction between the high-voltage and high-temperature stability and the room-temperature kinetic performance of the electrochemical apparatus.

In some embodiments of this application, the nitrile additive includes at least two of succinonitrile, adiponitrile, 1,3,6-hexanetrinitrile, 1,2,6-hexanetrinitrile, ethylene glycol bis(propionitrile) ether, or 1,2,3-tris(2-cyanoethoxy)propane. This enables the electrochemical apparatus to exhibit better high-voltage and high-temperature stability and room-temperature kinetic performance.

In some embodiments of this application, the electrolyte includes a linear carbonate, where based on the mass of the electrolyte, a mass percentage of the linear carbonate is 22% to 56%; and the linear carbonate includes at least one of methyl ethyl carbonate, diethyl carbonate, dimethyl carbonate, dipropyl carbonate, methyl propyl carbonate, or ethyl propyl carbonate. Controlling the mass percentage of the linear carbonate in the foregoing range is conducive to improving the room-temperature kinetic performance of the electrochemical apparatus. Selecting the foregoing linear carbonate can improve the room-temperature kinetic performance of the electrochemical apparatus, thereby resolving the contradiction between the high-voltage and high-temperature stability and the room-temperature kinetic performance of the electrochemical apparatus.

In some embodiments of this application, the electrolyte includes a lithium salt, where based on the mass of the electrolyte, a mass percentage of the lithium salt is 8% to 15%, and the lithium salt includes at least one of lithium hexafluorophosphate, lithium tetrafluoroborate, lithium difluorophosphate, lithium bistrifluoromethylsulfonimide, lithium bis(fluorosulfonyl)imide, lithium bisoxaloborate, or lithium difluoroxaloborate. Controlling the mass percentage of the lithium salt within the foregoing range is conducive to improving the high-voltage and high-temperature stability of the electrochemical apparatus and enhancing the room-temperature kinetic performance of the electrochemical apparatus, thereby resolving the contradiction between the high-voltage and high-temperature stability and the room-temperature kinetic performance of the electrochemical apparatus.

In some embodiments of this application, the viscosity of the electrolyte at 25°C is 4.8 mPa·s to 5.6 mPa·s. Controlling the viscosity of the electrolyte at 25°C in the foregoing range is conducive to improving the room-temperature kinetic performance of the electrochemical apparatus, thereby resolving the contradiction between the high-voltage and high-temperature stability and the room-temperature kinetic performance of the electrochemical apparatus.

In some embodiments of this application, the electrochemical apparatus includes a positive electrode, a negative electrode, and an electrolyte, where the electrolyte includes propylene carbonate, ethylene carbonate, a nitrile additive, and a linear carbonate. Based on a mass of the electrolyte, a mass percentage of the propylene carbonate is 8% to 21%, a mass percentage of the ethylene carbonate is 18% to 38%, a mass percentage of the nitrile additive is 3.5% to 7.2%, and a mass percentage of the linear carbonate is 22% to 56%. The nitrile additive includes at least one of succinonitrile, adiponitrile, 1,2,3-tris(2-cyanoethoxy)propane, or 1,3,6-hexanetrinitrile. The linear carbonate includes at least one of methyl ethyl carbonate, diethyl carbonate, or dimethyl carbonate. This enables the electrochemical apparatus to exhibit better high-voltage and high-temperature stability and room-temperature kinetic performance.

In some embodiments of this application, the electrochemical apparatus includes a positive electrode, a negative electrode, and an electrolyte, where the electrolyte includes propylene carbonate, ethylene carbonate, a nitrile additive, and a linear carbonate. Based on a mass of the electrolyte, a mass percentage of the propylene carbonate is 8% to 21%, a mass percentage of the ethylene carbonate is 18% to 38%, a mass percentage of the nitrile additive is 3.5% to 7.2%, and a mass percentage of the linear carbonate is 22% to 56%. The nitrile additive includes at least one of adiponitrile, 1,3,6-hexanetrinitrile, 1,2,3-tris(2-cyanoethoxy)propane, or ethylene glycol bis(propionitrile) ether. The linear carbonate includes at least one of methyl ethyl carbonate, diethyl carbonate, or dimethyl carbonate. This enables the electrochemical apparatus to exhibit better high-voltage and high-temperature stability and room-temperature kinetic performance.

In some embodiments of this application, the negative electrode includes a primer layer and a negative electrode active material, and a mass ratio of the primer layer to the negative electrode active material satisfies 1/300 to 1/50. Controlling the mass ratio of the primer layer to the negative electrode active material within the foregoing range is conducive to improving the room-temperature kinetic performance of the electrochemical apparatus and enhancing the high-voltage and high-temperature stability of the electrochemical apparatus, thereby resolving the contradiction between the high-voltage and high-temperature stability and the room-temperature kinetic performance of the electrochemical apparatus.

A second aspect of this application provides an electronic apparatus, including the electrochemical apparatus according to any one of the foregoing embodiments. The electrochemical apparatus provided in this application has good high-voltage and high-temperature stability and room-temperature kinetic performance, thereby the electronic apparatus provided in this application has good operational performance.

This application provides an electrochemical apparatus and an electronic apparatus. The electrochemical apparatus includes a positive electrode, a negative electrode, and an electrolyte, where the electrolyte includes propylene carbonate, ethylene carbonate, and a nitrile additive. Based on a mass of the electrolyte, a mass percentage of the propylene carbonate is 4% to 26%, a mass percentage of the ethylene carbonate is 14% to 46%, and a mass percentage of the nitrile additive is 2.8% to 8.5%. A viscosity of the electrolyte at 25°C is less than or equal to 5.8 mPa·s. The propylene carbonate is used to improve the high-temperature stability of the electrolyte. The ethylene carbonate is used to improve the room-temperature kinetic performance of the electrolyte. The nitrile additive is used to improve the high-temperature stability of the electrolyte. The low viscosity of the electrolyte is intended to improve the room-temperature kinetic performance of the electrolyte. By coordinately controlling the adding percentages of the propylene carbonate, ethylene carbonate, and nitrile additive, as well as the viscosity of the electrolyte at 25°C, the contradiction between the high-voltage and high-temperature stability and the room-temperature kinetic performance of the electrochemical apparatus can be resolved.

Certainly, implementing any embodiment of this application does not necessarily require all the advantages described above.

### DETAILED DESCRIPTION

To make the objectives, technical solutions, and advantages of this application more comprehensible, the following describes this application in detail with some embodiments of this application. Apparently, the described embodiments are merely some rather than all of the embodiments of this application. All other embodiments obtained by persons skilled in the art based on this application shall fall within the protection scope of this application.

It should be noted that in some specific embodiments of this application, an example in which a lithium-ion battery is used as an electrochemical apparatus is used to illustrate this application. However, the electrochemical apparatus in this application is not limited to the lithium-ion battery.

Generally, a lithium-ion battery includes a positive electrode, a negative electrode, a separator, an electrolyte, and the like, which are all important factors affecting performance of the lithium-ion battery. For high-voltage lithium cobaltate lithium-ion batteries, the biggest challenge comes from the contradiction between stability at high-voltage and high-temperature conditions (for example, cycling at 45°C, float charging at 45°C, and storage at 85°C) and kinetic performance at room temperature (for example, cycling, battery impedance, and lithium precipitation). For high-voltage systems, electrolyte is required to be highly resistant to oxidation. However, solvents with good kinetic performance all exhibit poor resistance to oxidation. In view of the foregoing problems, this application provides an electrochemical apparatus and an electronic apparatus, so as to resolve the contradiction between the high-voltage and high-temperature stability and the room-temperature kinetic performance of the electrochemical apparatus.

A first aspect of this application provides an electrochemical apparatus. The electrochemical apparatus includes a positive electrode, a negative electrode, and an electrolyte, where the electrolyte includes propylene carbonate (PC), ethylene carbonate (EC), and a nitrile additive. Based on a mass of the electrolyte, a mass percentage of the propylene carbonate is 4% to 26%, preferably 8% to 21%, a mass percentage of the ethylene carbonate is 14% to 46%, preferably 18% to 38%, and a mass percentage of the nitrile additive is 2.8% to 8.5%, preferably 3.5% to 7.2%. A viscosity of the electrolyte at 25°C is less than or equal to 5.8 mPa·s, preferably 4.8 mPa·s to 5.6 mPa·s. In the electrochemical apparatus provided in this application, by coordinately controlling the adding percentages of the propylene carbonate, ethylene carbonate, and nitrile additive, as well as the viscosity of the electrolyte at 25°C, the contradiction between the high-voltage and high-temperature stability and the room-temperature kinetic performance of the electrochemical apparatus can be resolved.

For example, the mass percentage of the propylene carbonate may be 4%, 4.6%, 5%, 5.3%, 8.7%, 10%, 10.1%, 12.3%, 15%, 16.1%, 18.2%, 20%, 23.3%, 25%, 26%, or any value within a range defined by any two of these values. Propylene carbonate has relatively high melting and boiling points, has good electrochemical stability, and is less prone to gas generation. When the mass percentage of the propylene carbonate is lower than 4%, the electrochemical apparatus is prone to gas generation at high-voltage and high-temperature conditions, leading to an increase in the storage swelling rate, and affecting the high-voltage and high-temperature stability of the electrochemical apparatus. A mass percentage of the propylene carbonate higher than 26% can result in graphite co-intercalation and deteriorate the quality of SEI film formation, thereby deteriorating the high-voltage and high-temperature cycling performance and room-temperature cycling performance of the electrochemical apparatus. Controlling the mass percentage of the propylene carbonate within the foregoing range is conducive to reducing gas generation of the electrochemical apparatus at high-temperature and high-voltage conditions, and is also conducive to improving the quality of SEI film formation, thereby improving the high-voltage and high-temperature stability and the room-temperature kinetic performance of the electrochemical apparatus.

For example, the mass percentage of the ethylene carbonate may be 14%, 14.4%, 15%, 15.3%, 18.4%, 20%, 21.4%, 25.3%, 28.7%, 30%, 32.4%, 35%, 37.8%, 40%, 43.3%, 45%, 46%, or any value within a range defined by any two of these values. Ethylene carbonate has poor electrochemical stability and is prone to gas generation. When the mass percentage of the ethylene carbonate is lower than 14%, it is prone to lead to a decrease in lithium ion conductivity of the electrolyte, and deteriorate the quality of SEI film formation. Consequently, the impedance of the electrochemical apparatus increases, affecting the high-voltage and high-temperature cycling performance and room-temperature cycling performance of the electrochemical apparatus. When the mass percentage of the ethylene carbonate is higher than 46%, the electrochemical apparatus is prone to lithium precipitation in the process of room-temperature cycling, and the electrochemical apparatus is prone to gas generation under high-voltage and high-temperature conditions, resulting in increased impedance and intensified storage swelling. Controlling the mass percentage of the ethylene carbonate within the foregoing range is conducive to enhancing the lithium ion conductivity of the electrolyte and improving the quality of SEI film formation, and is also conducive to reducing lithium precipitation during room-temperature cycling and gas generation under high-voltage and high-temperature conditions in the electrochemical apparatus, thereby improving the high-voltage and high-temperature stability and the room-temperature kinetic performance of the electrochemical apparatus.

For example, the mass percentage of the nitrile additive is 2.8%, 3%, 3.3%, 4%, 4.2%, 5%, 5.1%, 5.6%, 6%, 6.3%, 6.8%, 7%, 7.2%, 7.7%, 8%, 8.3%, 8.5%, or any value within a range defined by any two of these values. When the mass percentage of the nitrile additive is lower than 2.8%, it is not conducive to the formation of a good protective interface on the surface of the positive electrode to reduce the side reactions between a positive electrode active material and the electrolyte, leading to increased swelling of the electrochemical apparatus under high-voltage and high-temperature conditions and affecting the high-voltage and high-temperature cycling performance of the electrochemical apparatus. When the mass percentage of the nitrile additive is higher than 8.5%, the nitrile additive affects the quality of SEI film formation, and easily causes lithium precipitation at the negative electrode, thus affecting the high-voltage and high-temperature cycling performance and room-temperature cycling performance of the electrochemical apparatus. Controlling the mass percentage of the nitrile additive within the foregoing range is conducive to reducing the side reactions between the positive electrode active material and the electrolyte, and is also conducive to improving the quality of SEI film formation, thereby helping to improve the high-voltage and high-temperature stability and the room-temperature kinetic performance of the electrochemical apparatus.

For example, the viscosity of the electrolyte at 25°C is 4.4 mPa·s, 4.6 mPa·s, 4.8 mPa·s, 5.0 mPa·s, 5.2 mPa·s, 5.4 mPa·s, 5.6 mPa·s, 5.8 mPa·s, or any value within a range defined by any two of these values. When the viscosity of the electrolyte at 25°C is higher than 5.8 mPa·s, it is prone to lead to hindering of electrolyte infiltration and transport of lithium ions, and results in increased impedance during the charge and discharge process of the electrochemical apparatus and lithium precipitation at the negative electrode, thereby affecting the room-temperature kinetic performance of the electrochemical apparatus. Controlling the viscosity of the electrolyte at 25°C within the foregoing range is conducive to improving the room-temperature kinetic performance of the electrochemical apparatus.

In summary, by controlling the propylene carbonate, ethylene carbonate, and nitrile additive, as well as the viscosity of the electrolyte at 25°C within the ranges given in this application, the contradiction between the high-voltage and high-temperature stability and the room-temperature kinetic performance of the electrochemical apparatus can be resolved.

In some embodiments of this application, the electrolyte satisfies at least one of the following conditions: (1) the mass percentage of the propylene carbonate is 8% to 21%; (2) the mass percentage of the ethylene carbonate is 18% to 38%; or (3) the mass percentage of the nitrile additive is 3.5% to 7.2%.

In some embodiments of this application, the mass percentage of the propylene carbonate may be 8%, 9%, 10%, 10.1%, 13.6%, 14.7%, 15.4%, 17.8%, 19%, 21%, or any value within a range defined by any two of these values. Propylene carbonate has relatively high melting and boiling points, has good electrochemical stability, and is less prone to gas generation. When the mass percentage of the propylene carbonate is lower than 8%, the electrochemical apparatus is prone to gas generation at high-voltage and high-temperature conditions, leading to an increase in the storage swelling rate, and affecting the high-voltage and high-temperature stability of the electrochemical apparatus. A mass percentage of the propylene carbonate higher than 21% can result in graphite co-intercalation and deteriorate the quality of SEI film formation, thereby deteriorating the high-voltage and high-temperature cycling performance and room-temperature cycling performance of the electrochemical apparatus. Controlling the mass percentage of the propylene carbonate within the foregoing range is conducive to reducing gas generation of the electrochemical apparatus at high-temperature and high-voltage conditions, and is also conducive to improving the quality of SEI film formation, thereby improving the high-voltage and high-temperature stability and the room-temperature kinetic performance of the electrochemical apparatus.

In some embodiments of this application, the mass percentage of the propylene carbonate may be 9%, 10%, 10.2%, 13.6%, 15%, 16.4%, 17.2%, 18%, or any value within a range defined by any two of these values. This enables the electrochemical apparatus to exhibit better high-voltage and high-temperature stability and room-temperature kinetic performance.

In some embodiments of this application, the mass percentage of the ethylene carbonate may be 18%, 20%, 24%, 25%, 25.6%, 28.6%, 30%, 33.5%, 35%, 35.4%, 38%, or any value within a range defined by any two of these values. Ethylene carbonate has poor electrochemical stability and is prone to gas generation. When the mass percentage of the ethylene carbonate is lower than 18%, it is prone to lead to a decrease in lithium ion conductivity of the electrolyte, and deteriorate the quality of SEI film formation. Consequently, the impedance of the electrochemical apparatus increases, affecting the high-voltage and high-temperature cycling performance and room-temperature cycling performance of the electrochemical apparatus. When the mass percentage of the ethylene carbonate is higher than 38%, the electrochemical apparatus is prone to lithium precipitation in the process of room-temperature cycling, and the electrochemical apparatus is prone to gas generation under high-voltage and high-temperature conditions, resulting in increased impedance and storage swelling rate. Controlling the mass percentage of the ethylene carbonate within the foregoing range is conducive to enhancing the lithium ion conductivity of the electrolyte and improving the quality of SEI film formation, and is also conducive to reducing lithium precipitation during room-temperature cycling and gas generation under high-voltage and high-temperature conditions in the electrochemical apparatus, thereby improving the high-voltage and high-temperature stability and the room-temperature kinetic performance of the electrochemical apparatus.

In some embodiments of this application, the mass percentage of the ethylene carbonate may be 24%, 25.3%, 28.6%, 30%, 32.4%, 35%, 36%, or any value within a range defined by any two of these values. This enables the electrochemical apparatus to exhibit better high-voltage and high-temperature stability and room-temperature kinetic performance.

In some embodiments of this application, the mass percentage of the nitrile additive is 3.5%, 4%, 4.2%, 5%, 5.6%, 6%, 6.7%, 7.2%, or any value within a range defined by any two of these values. When the mass percentage of the nitrile additive is lower than 3.5%, it is not conducive to the formation of a good protective interface on the surface of the positive electrode to reduce the side reactions between a positive electrode active material and the electrolyte, leading to increased swelling of the electrochemical apparatus under high-voltage and high-temperature conditions and affecting the high-voltage and high-temperature cycling performance of the electrochemical apparatus. When the mass percentage of the nitrile additive is higher than 7.2%, the nitrile additive affects the quality of SEI film formation, and easily causes lithium precipitation at the negative electrode, thus affecting the high-voltage and high-temperature cycling performance and room-temperature cycling performance of the electrochemical apparatus. Controlling the mass percentage of the nitrile additive within the foregoing range is conducive to reducing the side reactions between the positive electrode active material and the electrolyte, and is also conducive to improving the quality of SEI film formation, thereby helping to improve the high-voltage and high-temperature stability and the room-temperature kinetic performance of the electrochemical apparatus.

In some embodiments of this application, the mass percentage of the nitrile additive is 3.9%, 4.2%, 4.6%, 5%, 5.3%, 5.6%, 6%, 6.4%, or any value within a range defined by any two of these values. This enables the electrochemical apparatus to exhibit better high-voltage and high-temperature stability and room-temperature kinetic performance.

In some embodiments of this application, the electrolyte includes a nitrile additive, where the nitrile additive includes at least one of succinonitrile, glutaronitrile, adiponitrile, 1,5-dicyanopentane, 1,6-dicyanohexane, 1,7-dicyanoheptane, 1,8-dicyanoctane alkane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,3,5-pentanetricarbonitrile, 1,2,3-propanetricarbonitrile, 1,3,6-hexanetrinitrile, 1,2,6-hexanetrinitrile, ethylene glycol bis(propionitrile) ether, 1,2,3-tris(2-cyanoethoxy)propane, 1,2,4-tris(2-cyanoethoxy)butane, or 1,2,5-tris(cyanoethoxy)pentane.

In some embodiments of this application, the nitrile additive includes at least two of succinonitrile, adiponitrile, 1,3,6-hexanetrinitrile, 1,2,6-hexanetrinitrile, ethylene glycol bis(propionitrile) ether, or 1,2,3-tris(2-cyanoethoxy)propane. This enables the electrochemical apparatus to exhibit better high-voltage and high-temperature stability and room-temperature kinetic performance.

In some embodiments of this application, the electrochemical apparatus includes a positive electrode, a negative electrode, and an electrolyte, where the electrolyte includes propylene carbonate, ethylene carbonate, a nitrile additive, and a linear carbonate. Based on a mass of the electrolyte, a mass percentage of the propylene carbonate is 8% to 21%, a mass percentage of the ethylene carbonate is 18% to 38%, a mass percentage of the nitrile additive is 3.5% to 7.2%, and a mass percentage of the linear carbonate is 22% to 56%. The nitrile additive includes at least one of succinonitrile, adiponitrile, 1,2,3-tris(2-cyanoethoxy)propane, or 1,3,6-hexanetrinitrile. The linear carbonate includes at least one of methyl ethyl carbonate, diethyl carbonate, or dimethyl carbonate. This enables the electrochemical apparatus to exhibit better high-voltage and high-temperature stability and room-temperature kinetic performance.

In some embodiments of this application, the electrochemical apparatus includes a positive electrode, a negative electrode, and an electrolyte, where the electrolyte includes propylene carbonate, ethylene carbonate, a nitrile additive, and a linear carbonate. Based on a mass of the electrolyte, a mass percentage of the propylene carbonate is 8% to 21%, a mass percentage of the ethylene carbonate is 18% to 38%, a mass percentage of the nitrile additive is 3.5% to 7.2%, and a mass percentage of the linear carbonate is 22% to 56%. The nitrile additive includes at least one of adiponitrile, 1,3,6-hexanetrinitrile, 1,2,3-tris(2-cyanoethoxy)propane, or ethylene glycol bis(propionitrile) ether. The linear carbonate includes at least one of methyl ethyl carbonate, diethyl carbonate, or dimethyl carbonate.

In some embodiments of this application, the electrolyte includes a linear carbonate, where based on the mass of the electrolyte, a mass percentage of the linear carbonate is 22% to 56%; and the linear carbonate includes at least one of methyl ethyl carbonate (EMC), diethyl carbonate (DEC), dimethyl carbonate (DMC), dipropyl carbonate (DPC), methyl propyl carbonate (MPC), or ethyl propyl carbonate (EPC). The addition of the linear carbonate to the electrolyte can lower the viscosity of the electrolyte at 25°C, reduce the impedance of the electrochemical apparatus, and improve the infiltration performance and lithium ion transport performance of the electrolyte, and as a result, improve the room-temperature kinetic performance of the electrochemical apparatus. Specifically, the mass percentage of the linear carbonate may be 22%, 25%, 27.2%, 30%, 32.4%, 35%, 37.6%, 40%, 43.2%, 45%, 47.6%, 50%, 52.8%, 55%, 56%, or any value within a range defined by any two of these values. Controlling the mass percentage of the linear carbonate in the foregoing range is conducive to improving the room-temperature kinetic performance of the electrochemical apparatus.

In some embodiments of this application, the electrolyte includes a lithium salt, and based on the mass of the electrolyte, a mass percentage of the lithium salt is 8% to 15%, preferably 10%. The lithium salt includes at least one of lithium hexafluorophosphate, lithium tetrafluoroborate, lithium difluorophosphate, lithium bistrifluoromethylsulfonimide, lithium bis(fluorosulfonyl)imide, lithium bisoxaloborate, or lithium difluoroxaloborate.

In some embodiments of this application, the viscosity of the electrolyte at 25°C is 4.6 mPa·s, 4.8 mPa·s, 5.0 mPa·s, 5.2 mPa·s, 5.4 mPa·s, 5.6 mPa·s, 5.8 mPa·s, or any value within a range defined by any two of these values. When the viscosity of the electrolyte is higher than 5.8 mPa·s, it leads to hindering of electrolyte infiltration and transport at 25°C. This results in increased impedance during the charge and discharge process of the electrochemical apparatus at 25°C and lithium precipitation at the negative electrode, thereby affecting the room-temperature kinetic performance of the electrochemical apparatus. Controlling the viscosity of the electrolyte at 25°C within the foregoing range is conducive to improving the room-temperature kinetic performance of the electrochemical apparatus.

In some embodiments of this application, the negative electrode includes a primer layer and a negative electrode active material, and a mass ratio of the primer layer to the negative electrode active material satisfies 1/300 to 1/50. Specifically, the mass ratio of the primer layer to the negative electrode active material may be 1/300, 1/250, 1/200, 1/150, 1/100, 1/50, or in any range therebetween. Controlling the mass ratio of the primer layer to the negative electrode active material within the foregoing range is conducive to improving the energy density of the negative electrode, maintaining the transport efficiency of lithium ions and electrons in the negative electrode, and thus improving the high-voltage and high-temperature and room-temperature kinetic performance of the electrochemical apparatus.

In this application, a negative electrode typically includes a negative electrode current collector and a negative electrode material layer. In some embodiments, a primer layer may be provided between the negative electrode current collector and the negative electrode material layer, the primer layer being disposed on a surface of the negative electrode current collector and the negative electrode material layer being disposed on a surface of the primer layer. The primer layer may be provided on one or two surfaces of the negative electrode current collector in a thickness direction of the negative electrode current collector. It should be understood that the "surface" herein may be an entire region of the negative electrode current collector, or may be a partial region of the positive electrode current collector. This is not particularly limited in this application, provided that the objectives of this application can be achieved. The negative electrode material layer may be provided on one or two surfaces of the primer layer in a thickness direction of the primer layer. It should be understood that the "surface" herein may be an entire region of the primer layer, or may be a partial region of the primer layer. This is not particularly limited in this application, provided that the objectives of this application can be achieved. The negative electrode current collector is not particularly limited in this application, provided that the objectives of this application can be achieved. For example, the negative electrode current collector may include but is not limited to copper foil, copper alloy foil, nickel foil, stainless steel foil, titanium foil, foamed nickel, foamed copper, a carbon-based current collector, or a composite current collector. Thickness of the negative electrode current collector is not particularly limited in this application, provided that the objectives of this application can be achieved. For example, the thickness of the negative electrode current collector is 4 µm to 12 µm.

In this application, the primer layer includes a carbon-containing conductive agent and a polymer binder. In some embodiments, a mass ratio of the carbon-containing conductive agent to the polymer binder satisfies 1:0.5 to 1:2. The carbon-containing conductive agent includes but is not limited to at least one of conductive carbon black, carbon nanotubes, carbon fiber, or graphene. The addition of the carbon-containing conductive agent to the negative electrode primer layer improves the transport efficiency of lithium ions and electrons in the negative electrode, thereby improving the cycling performance of the electrochemical apparatus. The polymer binder may be at least one of styrene-butadiene rubber, polyacrylate, polyvinylidene fluoride, polymethylmethacrylate, polytetrafluoroethylene, or sodium alginate. The polymer binder is not particularly limited in this application, provided that the objectives of this application can be achieved.

In this application, the negative electrode material layer includes a negative electrode active material, and the negative electrode active material is not particularly limited, provided that the objectives of this application can be achieved. For example, the negative electrode active material may include but is not limited to at least one of graphite, hard carbon, silicon, silicon monoxide, or silicone.

In this application, the negative electrode material layer may further include a conductive agent, and the conductive agent is not particularly limited in this application, provided that the objectives of this application can be achieved. For example, the conductive agent may include but is not limited to at least one of natural graphite, laminated graphite, artificial graphite, conductive carbon black, carbon nanotubes, carbon fiber, flake graphite, Ketjen black, graphene, a metal material, or a conductive polymer. The carbon nanotubes may include but are not limited to single-walled carbon nanotubes or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole.

In this application, the negative electrode material layer may further include a binder, and the binder is not particularly limited in this application, provided that the objectives of this application can be achieved. For example, the binder may include but is not limited to at least one of difluoroethylene-hexafluoropropylene (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, or nylon.

Proportions of the negative electrode active material, conductive agent, and binder in the negative electrode material layer are not particularly limited in this application, and may be proportions known in the art. For example, a mass ratio of the negative electrode active material, conductive agent, and binder may be (78-98.5):(0.1-10):(0.1-10).

In this application, the electrochemical apparatus may further include the foregoing positive electrode. The positive electrode typically includes a positive electrode current collector and a positive electrode material layer. The positive electrode material layer is disposed on at least one of two surfaces in a thickness direction of the positive electrode current collector. It can be understood that the "surface" herein may be an entire region of the positive electrode current collector, or may be a partial region of the positive electrode current collector. This is not particularly limited in this application, provided that the objectives of this application can be achieved. In this application, the positive electrode current collector is not particularly limited, provided that the objectives of this application can be achieved. For example, the positive electrode current collector may include but is not limited to aluminum foil, aluminum alloy foil, or a composite current collector, preferably aluminum foil. In this application, thickness of the positive electrode current collector is not particularly limited, provided that the objectives of this application can be achieved. For example, the thickness of the positive electrode current collector is 1 µm to 30 µm, preferably 5 µm to 12 µm.

In this application, the positive electrode material layer includes a positive electrode active material, where the positive electrode active material includes lithium cobaltate. In this application, the positive electrode active material may further include but is not limited to at least one of lithium nickel cobalt manganate, lithium nickel cobalt aluminate, lithium manganate, lithium nickel manganate, or lithium iron phosphate. Based on a mass of the positive electrode active material, a mass percentage of the lithium cobaltate is 50% to 95%.

In this application, the positive electrode material layer may further include a conductive agent, and the conductive agent is not particularly limited in this application, provided that the objectives of this application can be achieved. For example, the conductive agent may include but is not limited to at least one of the foregoing conductive agents.

In this application, the positive electrode material layer may further include a binder, and the binder is not particularly limited in this application, provided that the objectives of this application can be achieved. For example, the binder may include but is not limited to at least one of the foregoing binders.

Proportions of the positive electrode active material, conductive agent, and binder in the positive electrode material layer are not particularly limited in this application, and may be proportions known in the art. For example, a mass ratio of the positive electrode active material, conductive agent, and binder may be (78-99):(0.1-10):(0.1-10).

Optionally, the positive electrode may further include a conductive layer, and the conductive layer is sandwiched between the positive electrode current collector and the positive electrode material layer. Composition of the conductive layer is not particularly limited in this application. For example, the conductive layer may include but is not limited to the foregoing conductive agent and the foregoing binder.

In some embodiments of this application, density of the electrolyte is 1.10 g/mL to 1.35 g/mL, preferably 1.15 g/mL to 1.30 g/mL. When the density of the electrolyte satisfies the foregoing range, the electrolyte can better meet the demand for transport of lithium ions during a charge and discharge process of the electrochemical apparatus.

In this application, the electrochemical apparatus further includes a separator, and the separator is not particularly limited in this application, provided that the objectives of this application can be achieved. For example, the separator may include but is not limited to at least one of polyethylene (PE), polypropylene (PP), polytetrafluoroethylene-based polyolefin (PO) separator, polyester film (for example, polyethylene terephthalate (PET) film), cellulose film, polyimide film (PI), polyamide film (PA), spandex film, aramid film, woven film, non-woven film (non-woven fabric), microporous film, composite film, separator paper, laminated film, or spinning film, preferably PP. The separator in this application may have a porous structure, and a pore size is not particularly limited, provided that the objectives of this application can be achieved. For example, the pore size may be 0.01 µm to 1 µm. Thickness of the separator is not particularly limited in this application, provided that the objectives of this application can be achieved. For example, the thickness of the separator may be 5 µm to 500 µm.

In some embodiments of this application, the separator includes a substrate layer and a polymer layer and/or an inorganic layer provided on the substrate layer; where the polymer layer includes at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, polymethylmethacrylate, polymethyl acrylate, polyethyl acrylate, acrylic-styrene copolymer, polydimethylsiloxane, sodium polyacrylate, or sodium carboxymethyl cellulose; and the inorganic layer includes at least one of boehmite, Mg(OH)₂, SrTiO₃, SnO₂, CeO₂, MgO, NiO, CaO, ZnO, ZrO₂, Y₂O₃, Al₂O₃, TiO₂, or SiC. The provision of the polymer layer facilitates the improvement of the interface performance between the positive electrode and the separator, so as to improve the safety performance and cycling performance of the electrochemical apparatus; and the provision of the inorganic layer can improve the thermal contraction performance of the separator, thereby enhancing the safety performance of the electrochemical apparatus.

Thicknesses of the substrate layer, polymer layer, and inorganic layer are not particularly limited in this application, provided that the objectives of this application can be achieved. For example, the thickness of the substrate layer is 3 µm to 30 µm, the coating weight of the polymer layer is 0.5 mg/(5000 mm²) to 10 mg/(5000 mm²), and the thickness of the inorganic layer is 2 µm to 15 µm. In this application, the substrate layer may have a porous structure, and the porosity of the substrate layer is not particularly limited in this application, provided that the objectives of this application can be achieved in this application. For example, the porosity of the substrate layer is 10% to 60%. A material of the substrate layer may include but is not limited to at least one of polyethylene, polypropylene, or ethylene propylene copolymer.

A process for preparing the electrochemical apparatus is well known to persons skilled in the art, and is not particularly limited in this application. For example, the process may include but is not limited to the following steps: a positive electrode plate, a separator, and a negative electrode plate are stacked in sequence and go through operations such as winding and folding as needed to obtain an electrode assembly with a wound structure, the electrode assembly is put into a packaging bag, and the packaging bag is injected with an electrolyte and sealed to obtain an electrochemical apparatus; or a positive electrode plate, a separator, and a negative electrode plate are stacked in sequence, four corners of an entire laminated structure are fixed with tapes to obtain an electrode assembly with a laminated structure, the electrode assembly is put into a packaging bag, and the packaging bag is injected with an electrolyte and sealed to obtain an electrochemical apparatus. In addition, an overcurrent protection element, a guide, and the like may also be placed into the packaging bag as needed, so as to prevent pressure increase, overcharge, and overdischarge inside the electrochemical apparatus.

In some embodiments of this application, the electrochemical apparatus satisfies at least one of the following conditions: (i) the capacity retention rate is 81% to 90% after 1000 charge and discharge cycles at a charge/discharge voltage range of 3 V to 4.48 V at 25°C; (ii) the capacity retention rate is 81% to 90% after 700 charge and discharge cycles at a charge/discharge voltage range of 3 V to 4.48 V at 45°C; (iii) the direct current internal resistance change rate is 10% to 30% after 1000 charge and discharge cycles at a charge/discharge voltage range of 3 V to 4.48 V at 25°C; (iv) the direct current internal resistance change rate is 10% to 40% after 700 charge and discharge cycles at a charge/discharge voltage range of 3 V to 4.48 V at 45°C; or (v) the thickness variation rate of the electrochemical device after kept at 85°C for 6 hours is 1% to 10%. Specific test methods are described in the examples.

A second aspect of this application provides an electronic apparatus including the electrochemical apparatus according to any one of the foregoing embodiments. The electrochemical apparatus provided in this application resolves the contradiction between high-voltage and high-temperature stability and room-temperature kinetic performance of the electrochemical apparatus. As a result, the electronic apparatus provided in this application exhibits excellent high-voltage and high-temperature stability and room-temperature kinetic performance.

The electronic apparatus in this application is not particularly limited, and the electronic apparatus may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

### Examples

The following describes some embodiments of this application more specifically by using examples and comparative examples. Various tests and evaluations are performed in the following methods. In addition, unless otherwise specified, "part" and "%" are based on weight.

### Test method and device

### Cycling test

The lithium-ion battery was placed in a 25°C or 45°C thermostat and left there for 30 min so that the lithium-ion battery reached a constant temperature. The lithium-ion battery that had reached the constant temperature was charged at a constant current of 0.7C to a voltage of 4.48 V, then charged at a constant voltage of 4.48 V to a current of 82.5 mA, and then discharged at a constant current of 1C to a voltage of 3.0 V. This was one charge and discharge cycle. After charge/discharge in such manner, the capacity retention rate of the lithium-ion battery after a certain number of cycles at 25°C or 45°C was calculated. Capacity retention rate after 1000 cycles at 25̊C = 1000th-cycle discharge capacity at 25̊C/first-cycle discharge capacity at 25̊C × 100%. Capacity retention rate after 700 cycles at 45̊C = 700th-cycle discharge capacity at 45̊C/first-cycle discharge capacity at 45̊C × 100%.

### Direct current resistance (DCR) test

At 25°C or 45°C, the lithium-ion battery was charged at a constant current of 0.7C to a voltage of 4.48 V, charged at a constant voltage of 4.48 V to a current of 82.5 mA, and then discharged at a constant current of 0.2C for 4 h until the state of charge (SOC) of the lithium-ion battery was 20%. After the cycles, the lithium-ion battery was discharged to 20% SOC following the same charge and discharge steps described above, and then the direct current internal resistance (DCR) was tested.

Test method: the battery was discharged at 0.1C for 10s to obtain voltage V₀; and then discharged at 1C for 1s to obtain voltage Vi. DCR = (V₀ - Vi)/0.1C.

DCR change rate after 1000 cycles at 20% SOC at 25°C: (DCR (after 1000 cycles at 25°C)/DCR (of initial state at 25°C) - 1) × 100%.

DCR change rate after 700 cycles at 20% SOC at 45°C: (DCR (after 700 cycles at 45°C)/DCR (of initial state at 45°C) - 1) × 100%.

### Test for thickness swelling rate after storage

The lithium-ion battery was placed in a 25°C thermostat and left there for 30 min so that the lithium-ion battery reached a constant temperature. The lithium-ion battery that had reached the constant temperature was charged at a constant current of 0.7C to a voltage of 4.48 V, and then charged at a constant voltage of 4.48 V to a current of 82.5 mA. The thickness of the lithium-ion battery was measured and recorded as T₀. The battery was placed in an oven at 85°C for 6 h, and then cooled for 1 h. The thickness of the lithium-ion battery was measured as T1. The thickness of the lithium-ion battery in the oven was monitored in real time. Thickness swelling rate of the lithium-ion battery after storage for 6 h at 85°C = (T₁ - T₀)/T₀ × 100%.

### Test for viscosity at 25°C

300 ml of electrolyte was placed in a beaker and the viscosity of the electrolyte was measured at 25°C using a viscosity tester.

### Test for lithium precipitation at 25°C

After 1000 cycles, the lithium-ion battery was charged at a constant current of 0.7C to a voltage of 4.48 V, and then charged at a constant voltage of 4.48 V to a current of 82.5 mA. Then, the lithium-ion battery was disassembled to examine lithium precipitation on the surface of the negative electrode.

### Example 1-1

### <Preparation of negative electrode current collector copper foil containing primer layer>

The carbon-containing conductive agent conductive carbon black and the polymer binder styrene-butadiene rubber were mixed at a mass ratio of 1:1, and then added with deionized water and homogenized to obtain a primer layer slurry. The slurry was then applied onto one surface of a copper foil with a thickness of 10 µm, and then the copper foil was dried at 120°C to obtain a copper foil containing a primer layer with a thickness of 0.8 µm on one side. The foregoing steps were repeated on another surface of the copper foil to obtain a negative electrode current collector copper foil containing a primer layer on two sides, where the final surface density of the primer layer was 1.0 mg/cm².

### <Preparation of negative electrode>

The negative electrode active material artificial graphite, the carbon-containing conductive agent conductive carbon black, the thickener sodium carboxymethyl cellulose, and the polymer binder styrene-butadiene rubber were mixed at a mass ratio of 96.5:1.5:1:1, added with deionized water, and well stirred by a vacuum stirrer to obtain a negative electrode slurry with a solid content of 75wt%. The negative electrode slurry was uniformly applied onto one surface of the copper foil containing the primer layer prepared as described above, and the copper foil was dried at 120°C to obtain a copper foil containing the primer layer and coated with a negative electrode material layer with a thickness of 90 µm on one side. The foregoing steps were repeated on another surface of the copper foil containing the primer layer to obtain a negative electrode current collector coated with the primer layers and the negative electrode material layers on two sides. Then, after cold pressing, cutting, and slitting, a 476 mm × 93.5 mm negative electrode was obtained.

### <Preparation of positive electrode>

The positive electrode active material lithium cobaltate, the carbon-containing conductive agent conductive carbon black, and the polymer binder polyvinylidene fluoride were mixed at a mass ratio of 96.6:1.5:1.9, added with N-methylpyrrolidone (NMP), and well stirred by a vacuum stirrer to obtain a positive electrode slurry with a solid content of 75wt%. The positive electrode slurry was uniformly applied onto one surface of the positive electrode current collector aluminum foil with a thickness of 10 µm, and the aluminum foil was dried at 120°C to obtain a positive electrode coated with a positive electrode material layer with a thickness of 80 µm on one side. The foregoing steps were repeated on another surface of the aluminum foil to obtain a positive electrode coated with a positive electrode material layer on two sides. Then, after cold pressing, cutting, and slitting, a 470 mm × 92 mm positive electrode was obtained.

### <Preparation of electrolyte>

In a glove box under argon atmosphere with a moisture content less than 10 ppm, EMC and DEC were mixed at a mass ratio of 20:50 with EC and PC to obtain an organic solvent, and then the organic solvent was added with a lithium salt lithium hexafluorophosphate and nitrile additives ethylene glycol bis(propionitrile) ether, adiponitrile, and 1,3,6-hexanetrinitrile to obtain an electrolyte. Here, a mass percentage of the lithium salt was 10%, a mass percentage of the EC was 30%, a mass percentage of the PC was 5.3%, a mass percentage of the ethylene glycol bis(propionitrile) ether was 0.5%, a mass percentage of the adiponitrile was 3%, and a mass percentage of the 1,3,6-hexanetrinitrile was 1.5%.

### <Preparation of separator>

A porous polyethylene film with a thickness of 10 µm was used.

### <Preparation of lithium-ion battery>

The prepared positive electrode, separator, and negative electrode were stacked in sequence, so that the separator was sandwiched between the positive electrode and the negative electrode for separation. Then winding was performed to obtain an electrode assembly with a thickness of 3.6 mm, a width of 42 mm, and a length of 95 mm. The electrode assembly was placed into an aluminum-plastic film packaging bag, and dried to remove water. Then, the electrolyte was filled into the aluminum-plastic film packaging bag, and processes such as vacuum packaging, standing, formation, degassing, and trimming were performed to obtain a lithium-ion battery.

### Examples 1-2 to 1-26

These examples were the same as Example 1-1 except that the related preparation parameters were adjusted according to Table 1.

### Examples 2-1 to 2-8

These examples were the same as Example 1-1 except that in <Preparation of negative electrode>, the negative electrode current collector was not coated with a primer layer, and the related preparation parameters were adjusted according to Table 2.

### Comparative Examples 1-1 to 1-13

These examples were the same as Example 1-1 except that the related preparation parameters were adjusted according to Table 1.

The preparation parameters and performance tests of the examples and comparative examples are shown in Table 1 and Table 2.

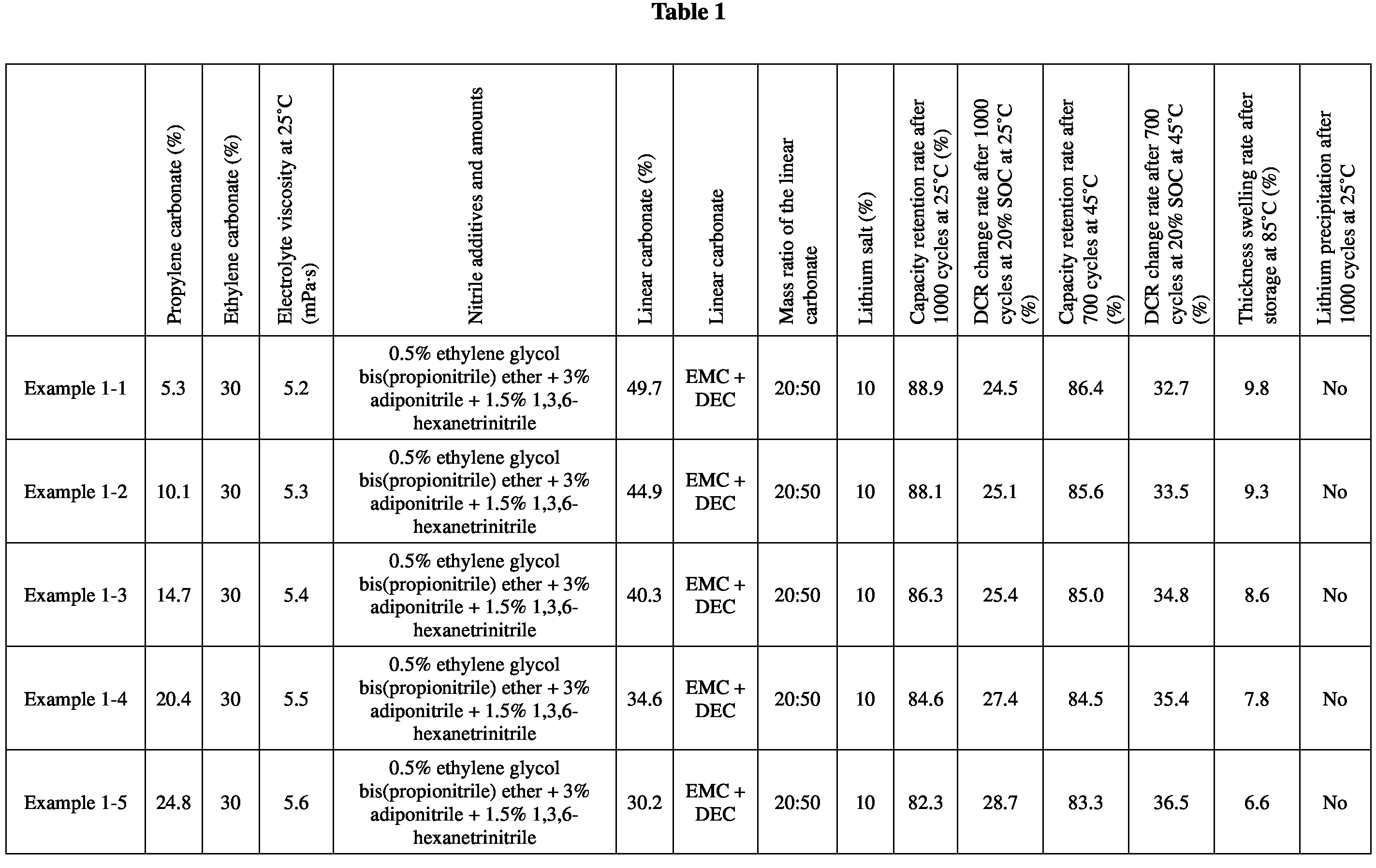

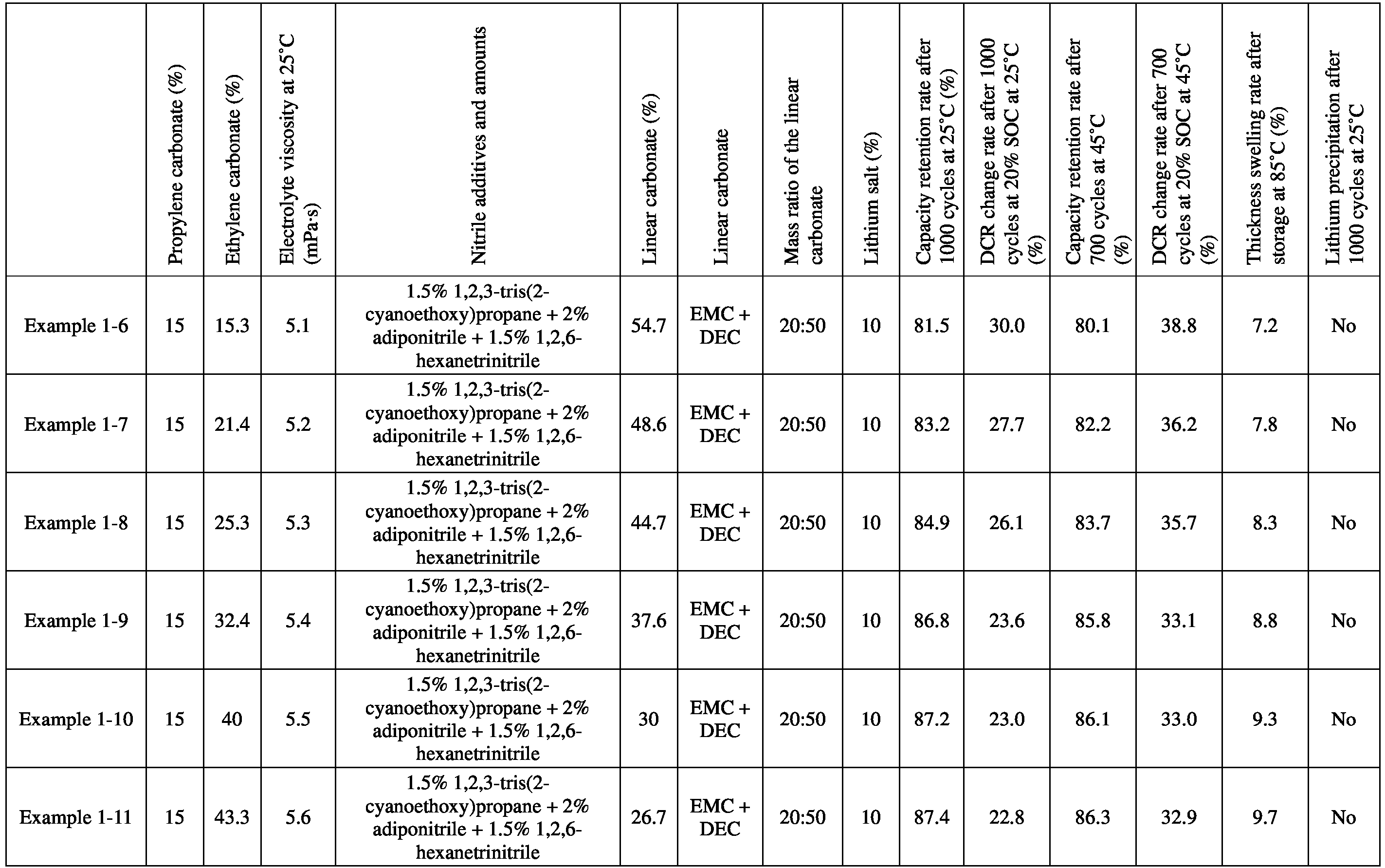

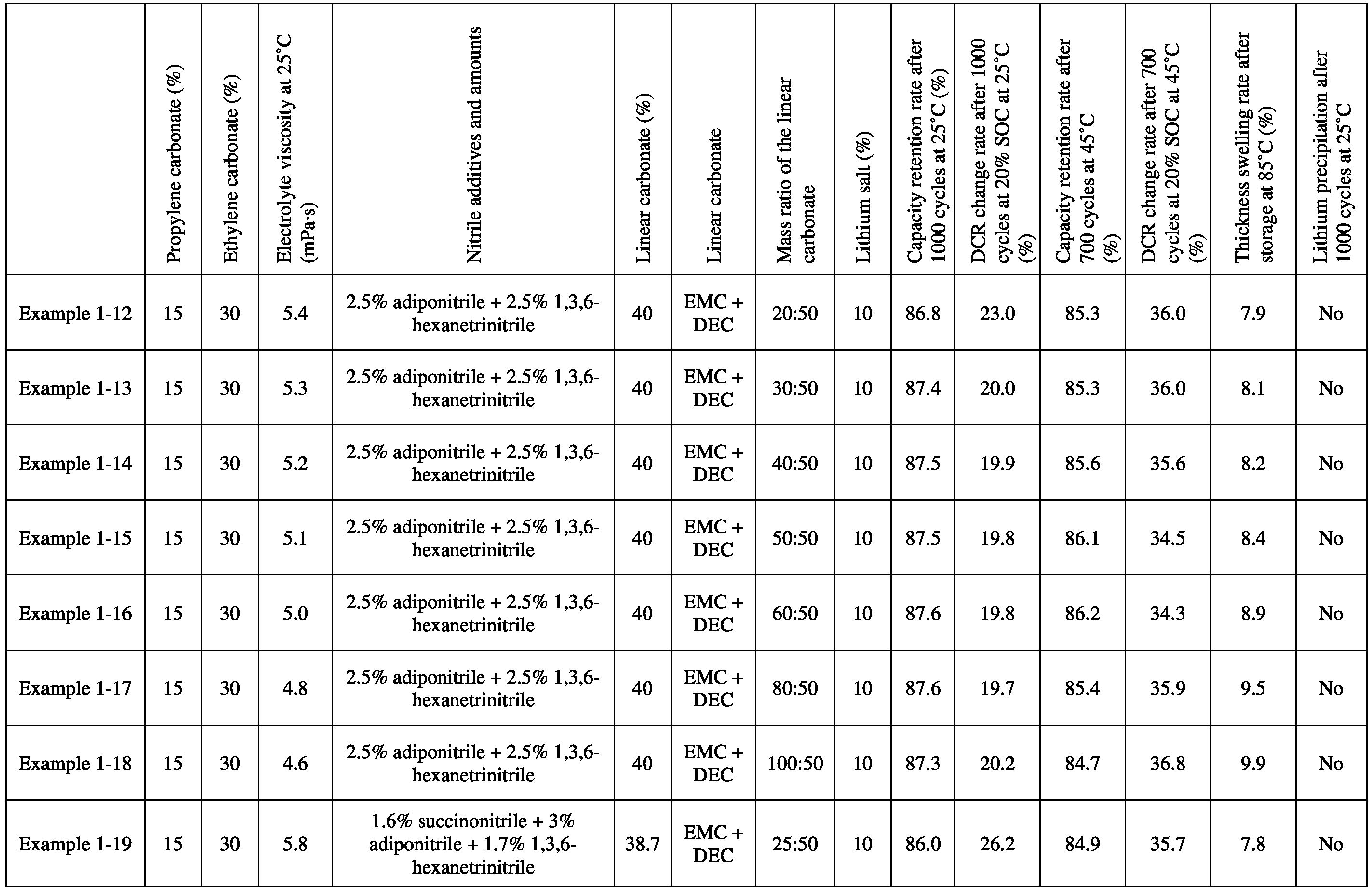

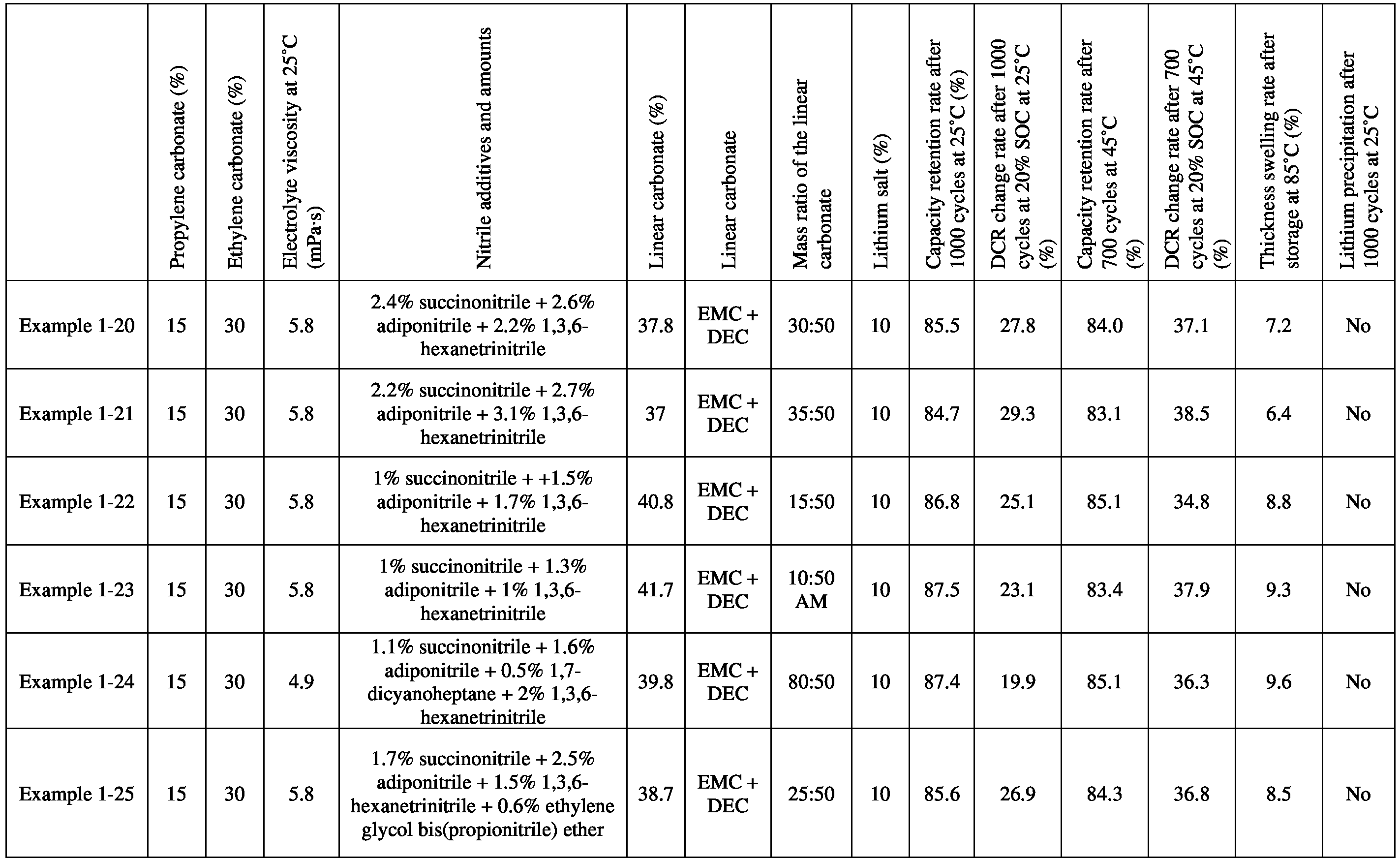

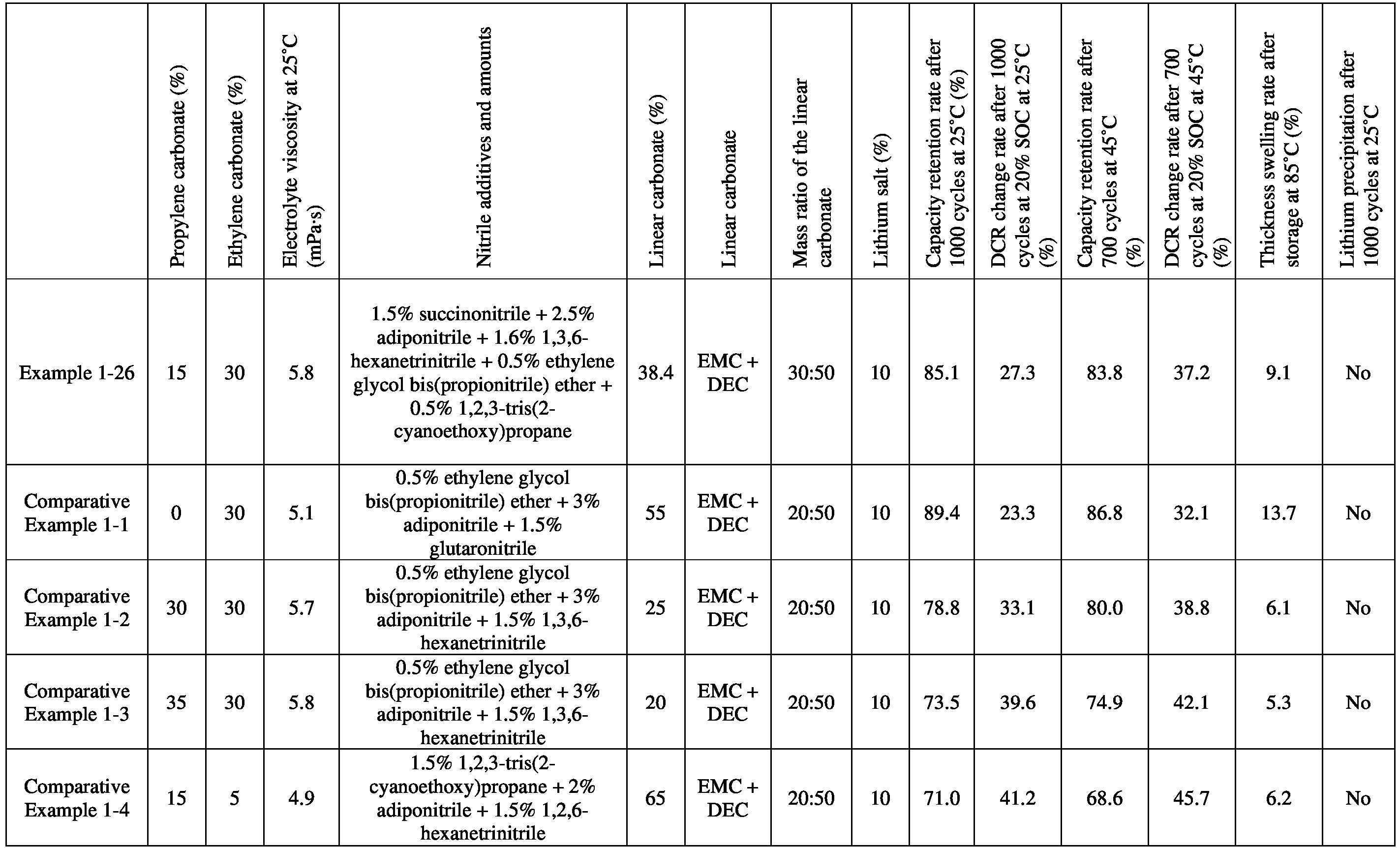

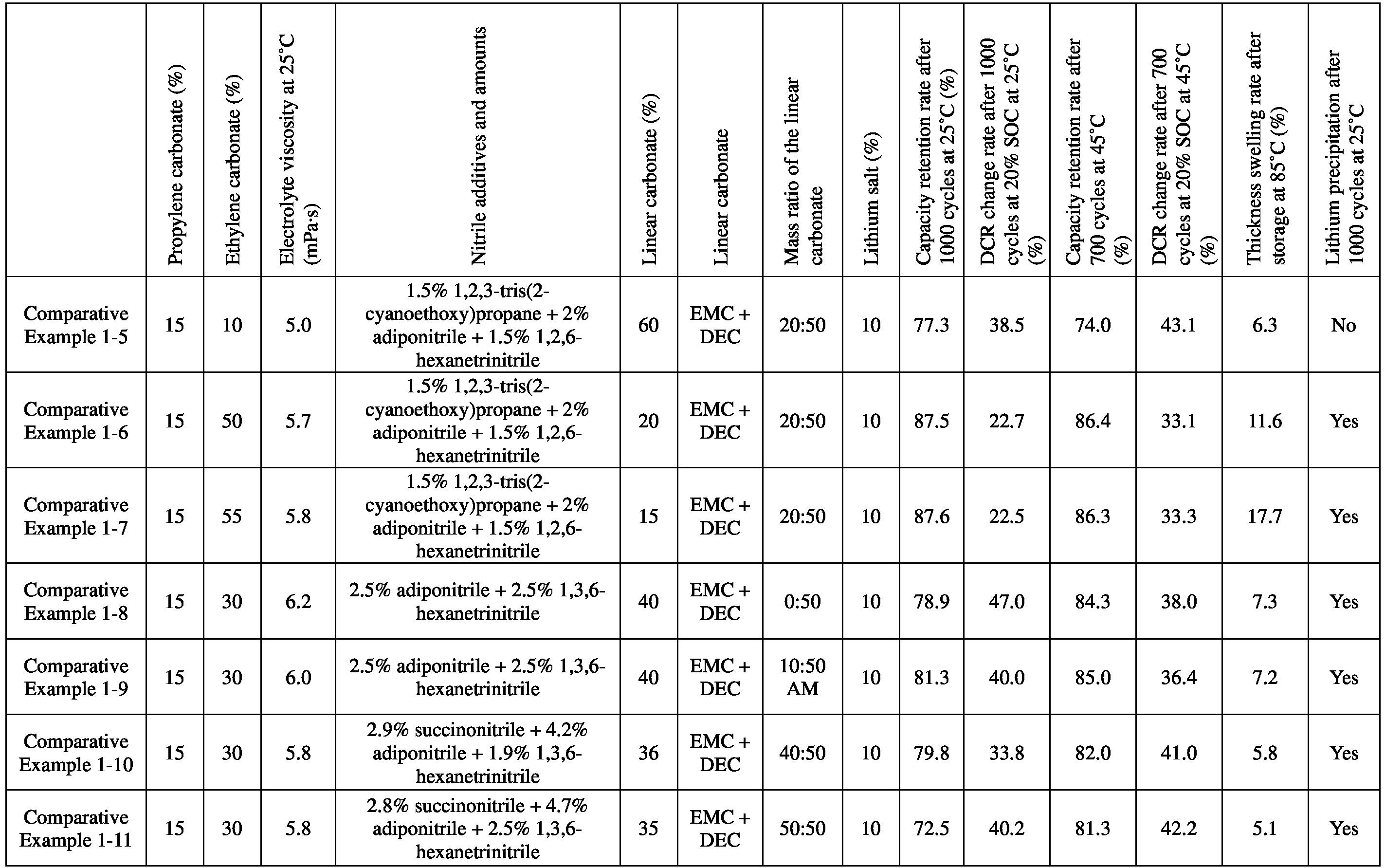

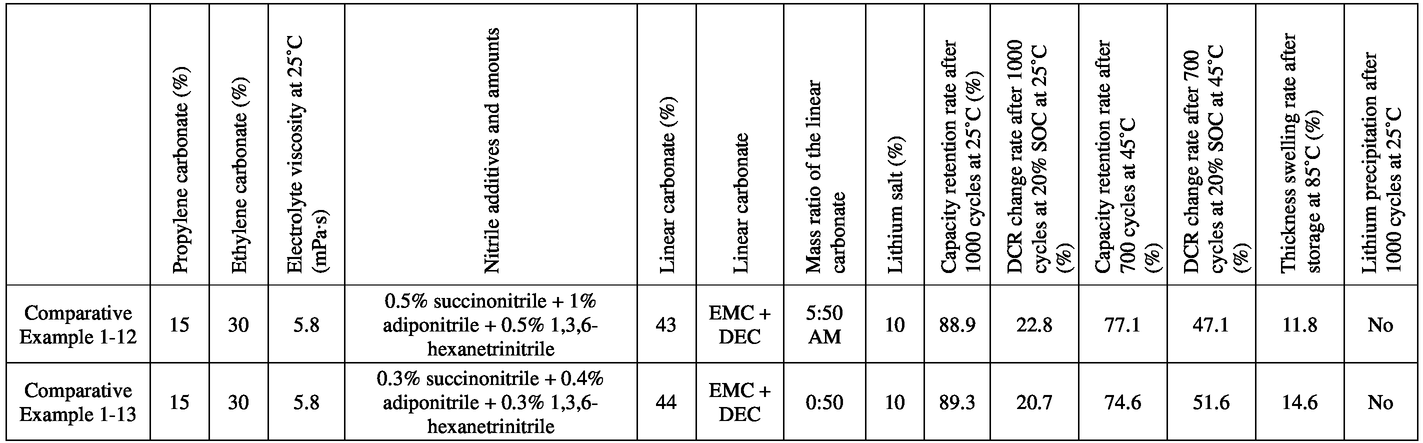

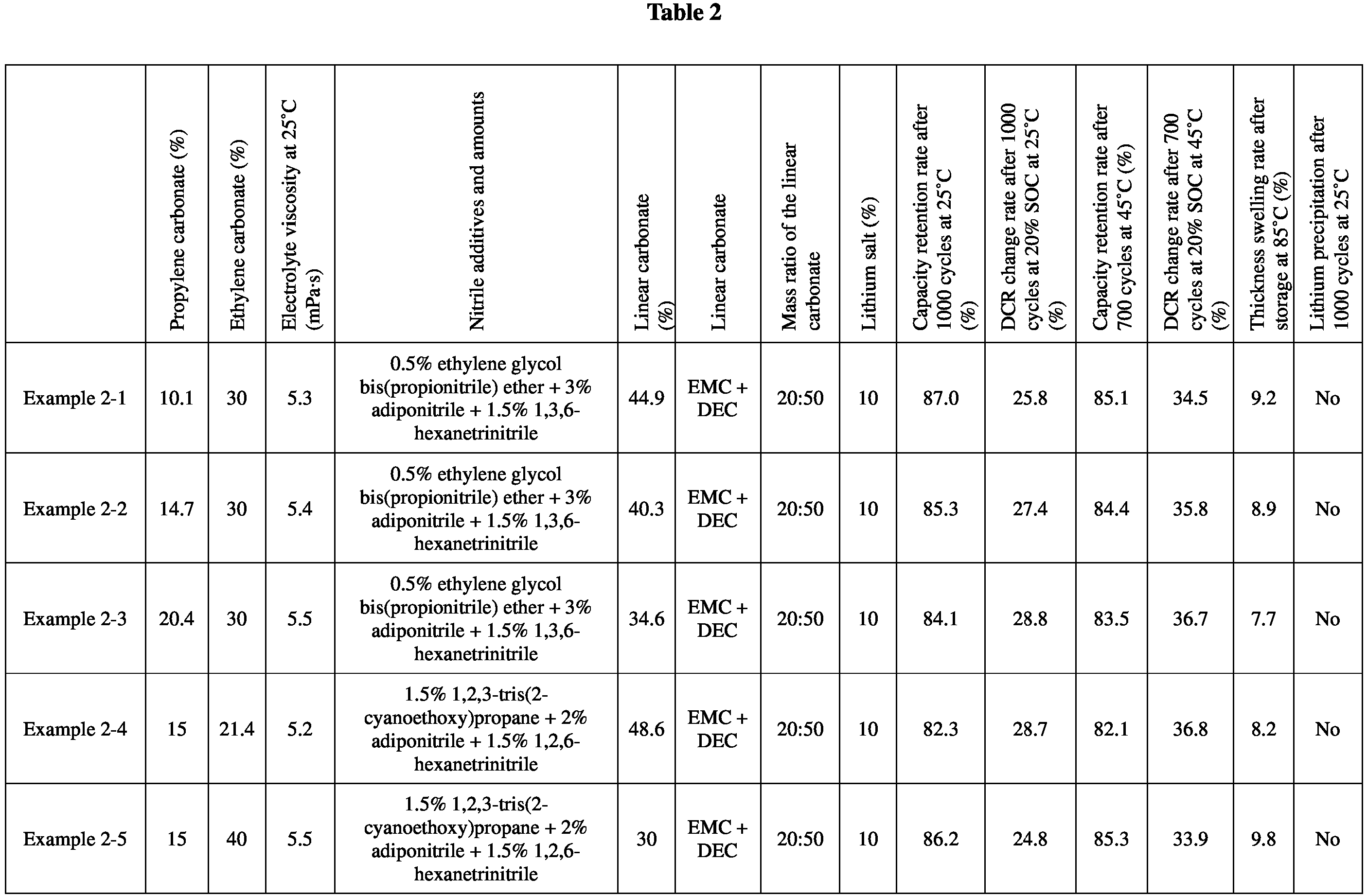

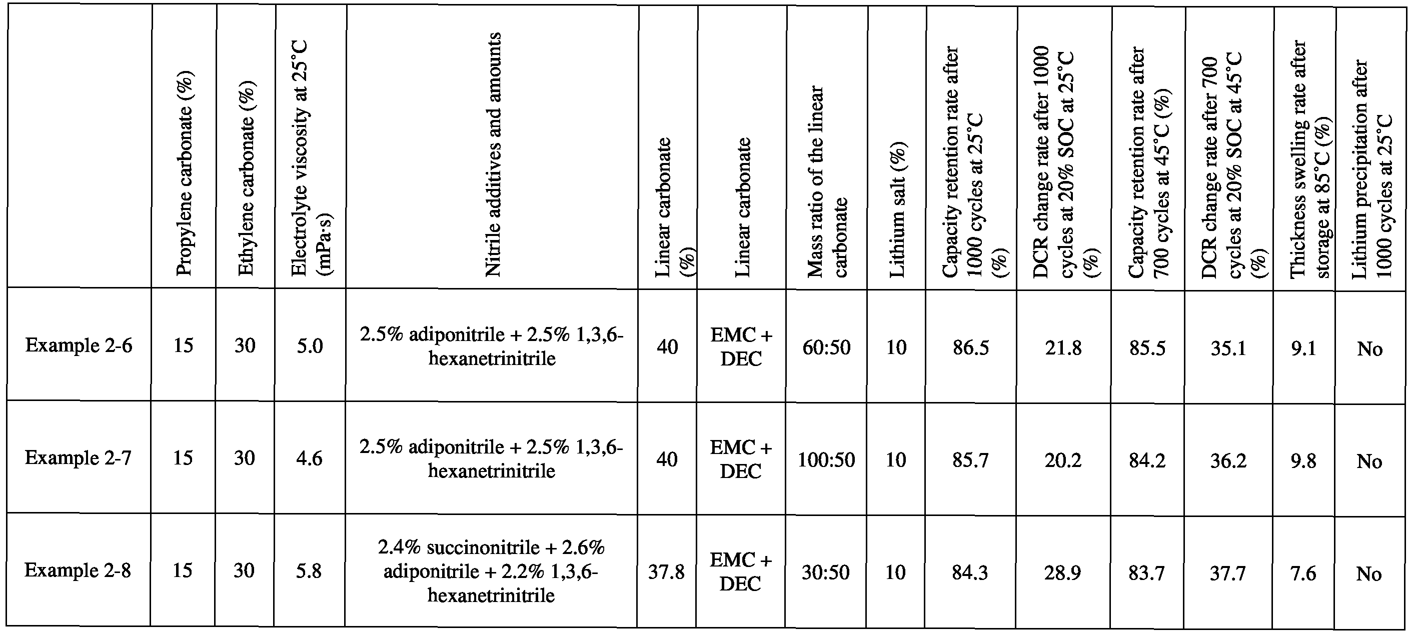

As can be seen from Examples 1-1 to 1-5, and Comparative Examples 1-1 to 1-3, when the mass percentage of the propylene carbonate is within the range given in this application, the mass percentage of the propylene carbonate is low and the obtained lithium-ion batteries have high capacity retention rate and low impedance at high-voltage and high-temperature conditions and room-temperature conditions, as well as good storage performance at high-voltage and high-temperature conditions. This indicates that the obtained lithium-ion batteries have good high-voltage and high-temperature stability and room-temperature kinetic performance.

As can be seen from Example 1-3, Examples 1-6 to 1-11, and Comparative Examples 1-4 to 1-7, when the mass percentage of the ethylene carbonate is within the range given in this application, the mass percentage of the ethylene carbonate is high and the obtained lithium-ion batteries have good cycling performance and low impedance at high-voltage and high-temperature conditions and room-temperature conditions, as well as good storage performance at high-voltage and high-temperature conditions. This indicates that the obtained lithium-ion batteries have good high-voltage and high-temperature stability and room-temperature kinetic performance.

As can be seen from Example 1-3, Examples 1-12 to 1-18, and Comparative Examples 1-8 to 1-9, when the viscosity of the electrolyte at 25°C is kept within the range given in this application, the obtained lithium-ion batteries have low impedance and good cycling performance at room-temperature conditions.

As can be seen from Example 1-3, Examples 1-19 to 1-26, and Comparative Examples 1-10 to 1-13, when the mass percentage of the nitrile additive is within the range given in this application, the obtained lithium-ion batteries have low impedance and high capacity retention rate in high-temperature and high-voltage conditions and room-temperature conditions, as well as good storage performance at high-voltage and high-temperature conditions. This indicates that the lithium-ion batteries have better comprehensive performance.

As can be seen from Examples 1-2 to 1-4, Example 1-7, Example 1-10, Example 1-20, Example 1-15, Example 1-17, and Examples 2-1 to 2-8, when the mass percentage of the propylene carbonate, the mass percentage of the ethylene carbonate, the mass percentage of the nitrile additives, and the viscosity of the electrolyte at 25 °C are within the ranges given in this application, the lithium-ion battery with a negative electrode containing the primer layer, compared with the lithium-ion battery with a negative electrode not containing the primer layer, has lower impedance and better cycling performance at high-voltage and high-temperature conditions and room-temperature conditions, as well as better storage performance at high-voltage and high-temperature conditions. For the lithium-ion battery with a negative electrode containing the primer layer, the contact between the negative electrode active material and the current collector is further strengthened, facilitating the lithium ion transport, and thereby can better resolve the contradiction between high-voltage and high-temperature stability and room-temperature kinetic performance.

The term "comprise" or any of its variants are intended to cover a non-exclusive inclusion, so that a process, a method, an article, or a device that includes a series of elements not only includes those elements but also includes other elements that are not expressly listed, or further includes elements inherent to such process, method, article, or device.

Some embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, wherein the electrochemical apparatus comprises a positive electrode, a negative electrode, and an electrolyte, the electrolyte comprising propylene carbonate, ethylene carbonate, and a nitrile additive, wherein based on a mass of the electrolyte, a mass percentage of the propylene carbonate is 4% to 26%, a mass percentage of the ethylene carbonate is 14% to 46%, and a mass percentage of the nitrile additive is 2.8% to 8.5%; and a viscosity of the electrolyte at 25°C is less than or equal to 5.8 mPa·s.

2. The electrochemical apparatus according to claim 1, wherein the electrolyte satisfies at least one of the following conditions:
(1) the mass percentage of the propylene carbonate is 8% to 21%;
(2) the mass percentage of the ethylene carbonate is 18% to 38%; or
(3) the mass percentage of the nitrile additive is 3.5% to 7.2%.

3. The electrochemical apparatus according to claim 1 or 2, wherein the nitrile additive comprises at least one of succinonitrile, glutaronitrile, adiponitrile, 1,5-dicyanopentane, 1,6-dicyanohexane, 1,7-dicyanoheptane, 1,8-dicyanoctane alkane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,3,5-pentanetricarbonitrile, 1,2,3-propanetricarbonitrile, 1,3,6-hexanetrinitrile, 1,2,6-hexanetrinitrile, ethylene glycol bis(propionitrile) ether, 1,2,3-tris(2-cyanoethoxy)propane, 1,2,4-tris(2-cyanoethoxy)butane, or 1,2,5-tris(cyanoethoxy)pentane.

4. The electrochemical apparatus according to any one of claims 1 to 3, wherein the electrolyte comprises a linear carbonate, wherein based on the mass of the electrolyte, a mass percentage of the linear carbonate is 22% to 56%; and the linear carbonate comprises at least one of methyl ethyl carbonate, diethyl carbonate, dimethyl carbonate, dipropyl carbonate, methyl propyl carbonate, or ethyl propyl carbonate.

5. The electrochemical apparatus according to any one of claims 1 to 4, wherein the electrolyte comprises a lithium salt, wherein based on the mass of the electrolyte, a mass percentage of the lithium salt is 8% to 15%; and the lithium salt comprises at least one of lithium hexafluorophosphate, lithium tetrafluoroborate, lithium difluorophosphate, lithium bistrifluoromethylsulfonimide, lithium bis(fluorosulfonyl)imide, lithium bisoxaloborate, or lithium difluoroxaloborate.

6. The electrochemical apparatus according to any one of claims 1 to 5, wherein the viscosity of the electrolyte at 25°C is 4.8 mPa·s to 5.6 mPa·s.

7. The electrochemical apparatus according to any one of claims 1 to 6, wherein the negative electrode comprises a primer layer and a negative electrode active material, and a mass ratio of the primer layer to the negative electrode active material satisfies 1/300 to 1/50.

8. The electrochemical apparatus according to any one of claims 1 to 7, wherein the electrolyte satisfies at least one of the following conditions:
(1) the mass percentage of the propylene carbonate is 9% to 18%;
(2) the mass percentage of the ethylene carbonate is 24% to 36%; or
(3) the mass percentage of the nitrile additive is 3.9% to 6.4%.

9. The electrochemical apparatus according to any one of claims 1 to 8, wherein the nitrile additive comprises at least two of succinonitrile, adiponitrile, 1,3,6-hexanetrinitrile, 1,2,6-hexanetrinitrile, ethylene glycol bis(propionitrile) ether, or 1,2,3-tris(2-cyanoethoxy)propane.

10. An electrochemical apparatus, wherein the electrochemical apparatus comprises a positive electrode, a negative electrode, and an electrolyte, the electrolyte comprising propylene carbonate, ethylene carbonate, a nitrile additive, and a linear carbonate, wherein based on a mass of the electrolyte, a mass percentage of the propylene carbonate is 8% to 21%, a mass percentage of the ethylene carbonate is 18% to 38%, a mass percentage of the nitrile additive is 3.5% to 7.2%, and a mass percentage of the linear carbonate is 22% to 56%; the nitrile additive comprises at least one of succinonitrile, adiponitrile, or 1,3,6-hexanetrinitrile; and the linear carbonate comprises at least one of methyl ethyl carbonate, diethyl carbonate, or dimethyl carbonate.

11. An electrochemical apparatus, wherein the electrochemical apparatus comprises a positive electrode, a negative electrode, and an electrolyte, the electrolyte comprising propylene carbonate, ethylene carbonate, a nitrile additive, and a linear carbonate, wherein based on a mass of the electrolyte, a mass percentage of the propylene carbonate is 8% to 21%, a mass percentage of the ethylene carbonate is 18% to 38%, a mass percentage of the nitrile additive is 3.5% to 7.2%, and a mass percentage of the linear carbonate is 22% to 56%; the nitrile additive comprises at least one of adiponitrile, 1,3,6-hexanetrinitrile, or ethylene glycol bis(propionitrile) ether; and the linear carbonate comprises at least one of methyl ethyl carbonate, diethyl carbonate, or dimethyl carbonate.

12. An electronic apparatus, comprising the electrochemical apparatus according to any one of claims 1 to 11.
